# EUROPÄISCHE PATENTANMELDUNG

(11) **EP 4 112 003 A1**
(43) Veröffentlichungstag der Anmeldung: **04.01.2023**
(21) Anmeldenummer: 22181514.5
(22) Anmeldetag: 28.06.2022
(51) Int. Cl.: A61C 13/00, B33Y 30/00, G10L 15/22, A61C 1/00, F27B 17/02, G05B 19/18

(54) **DENTALGERÄT MIT SPRACHERKENNUNG**

(30) Priorität: 01.07.2021 EP 21183246
(71) Anmelder: Ivoclar Vivadent AG, 9494 Schaan (LI)
(72) Erfinder: BROTZGE, Michael, 6842 Koblach (AT); Tiefenthaler, Michael, 6820 Franstanz (AT); Matt, Johannes, 9493 Mauren (LI); Grünenfelder, Robert, 9486 Schaanwald (LI); Gabathuler, Diego, 9470 Buchs (CH)
(74) Vertreter: Baronetzky, Klaus

(57) **Zusammenfassung**

Es ist ein Dentalgerät mit einem Spracherkennungsmodul vorgesehen, das an eine Steuervorrichtung angeschlossen ist, die mindestens ein Teil der Funktionen des Dentalgeräts steuert. Das Spracherkennungsmodul löst basierend auf dem Erkennungsergebnis eine ausgewählte Funktion des Dentalgeräts über die Steuervorrichtung aus und weist mindestens ein Mikrofon auf. Ein Ausgabemodul gibt Informationen über die ausgelöste Funktion aus. Das Codewortmodul hört über das Mikrofon kontinuierlich mit. Das Codewortmodul aktiviert beim Erkennen eines Codeworts das Spracherkennungsmodul für die zeitlich darauffolgenden Worte. Dieses versucht, aus den zeitlich darauffolgenden Worte vorgegebene, je einer Funktion zugeordnete Steuerwörter zu erkennen.

## Beschreibung

Die Erfindung betrifft ein Dentalgerät mit einem Spracherkennungsmodul, gemäß dem Oberbegriff von Anspruch 1 bzw. 12.

Ein Beispiel für ein Dentalgerät ist ein Dentalofen oder eine Dentalfräsmaschine.

Derartige Dentalgeräte weisen typischerweise für die Bedienung geeignete Bedienelemente wie Schalter und Knöpfe einerseits und häufig einen Bildschirm andererseits auf. Anstelle des Bildschirms werden auch häufige beliebige geeignete Anzeigeelemente wie LEDs eingesetzt, aber auch Lautsprecher, beispielsweise, um das Ende eines dentalen Bearbeitungsvorgangs auch akustisch zu signalisieren.

Ferner ist es bekannt geworden, einen Touchscreen einzusetzen, der sowohl für die Eingabe als auch für die Ausgabe von Daten eingesetzt werden kann.

Die Benutzer von Dentalgeräten sind häufig manuell anderweitig eingebunden, haben also ihre Hände nicht zur Verfügung, um das Dentalgerät zu bedienen.

Bei derartigen Dentalgeräten ist es daher bereits vorgeschlagen worden, die Kommunikation mit dem Benutzer zu erleichtern.

Aus der EP 2 368 513 A1 ist es bekannt geworden, eine Steuervorrichtung für einen Weichgewebelaser mittels Spracheingabe zu bedienen. Ferner ist ein Lautsprecher vorgesehen, der die eingestellte Parameter-Kombination durch Sprachausgabe angibt.

Die Spracheingabe bezieht sich bei dieser Lösung auf den oder die je einzustellenden Parameter des Lasers, und die Ausgabe ist ebenfalls auf die betreffenden Parameter beschränkt.

Demgegenüber liegt der Erfindung die Aufgabe zugrunde, ein Dentalgerät mit Spracherkennung gemäß dem Oberbegriff von Anspruch 1 bzw. 12 zu schaffen, dessen Handhabung vereinfacht und dessen Akzeptanz erhöht ist.

Diese Aufgabe wird erfindungsgemäß durch Anspruch 1 bzw. 12 gelöst. Vorteilhafte Weiterbildungen ergeben sich aus den Unteransprüchen.

Erfindungsgemäß ist es vorgesehen, ein spezielles Codewortmodul zu realisieren. Das Mikrofon ist Teil des Codewortmoduls und bleibt während des Betriebs des Dentalgeräts eingeschaltet.

Erfindungsgemäß schaltet das Codewortmodul ein Spracherkennungsmodul ein. Das Codewortmodul schaltet die Zuordnung der folgenden Wörter zum Vergleich mit Steuerwörtern frei. Ohne diese Freischaltung ist das Spracherkennungsmodul nicht aktiv. Damit ist sichergestellt, dass nicht vom Spracherkennungsmodul erkannte Wörter ohne ein Codewort die entsprechende Funktion des Dentalgeräts auslösen.

Ferner wird dadurch die Möglichkeit eröffnet, die die gleiche Funktionen auslösenden Steuerwörter deutlich zu erhöhen, und zwar, ohne dass die Gefahr besteht, dass erkannte Steuerwörter eine nicht erwünschte Funktion auslösen.

Erfindungsgemäß ist es ferner dadurch möglich, die Trainingszeit für das Spracherkennungsmodul zu reduzieren, gegebenenfalls sogar auf ein Training zu verzichten.

Dies trägt erheblich zur Erhöhung der Akzeptanz bei, gerade auch dann, wenn unterschiedliche Benutzer das gleiche Dentalgerät bedienen wollen.

Erfindungsgemäß werden die dem erkannten Codewort nachfolgenden Wörter der Spracherkennung unterworfen, und diese löst eine Funktion des Dentalgeräts gesteuert durch die Steuervorrichtung aus, wenn ein Wort erkannt wird, das der betreffenden Funktion zugeordnet ist.

Wenn beispielsweise ein vorher festgelegtes Programm gestartet werden sollen, kann die Funktion "Start" sowohl von dem Steuerwort "Start" als auch von dem Steuerwort "Los" ausgelöst werden.

Ferner kann die Spracherkennung weniger kritisch eingestellt sein, so dass die Worterkennung von "Start" sowohl erfolgreich ist, wenn eine männliche Stimme als auch wenn eine weibliche Stimme das Wort "Start" ausspricht.

In vorteilhafter Ausgestaltung der Erfindung ist es vorgesehen, eine Mehrzahl von Steuerworten einem Befehl, der die betreffende Funktion auslöst, zuzuordnen.

Bevorzugt erfolgt auch diese Zuordnung in dem Spracherkennungsmodul. Das Spracherkennungsmodul ist bevorzugt getrennt vom dem Codewortmodul realisiert. Es ist aber auch eine integrierte Realisierung dieser beiden Module möglich, bei der sich diese z.B. das gleiche Mikrofon teilen.

Das Codewortmodul ist bevorzugt auf einem kleinen und separaten Einplatinencomputer wie einem RaspberryPi realisiert. Dieser ist so programmiert, dass er ausschließlich das vorgegebene Codewort erkennt. Damit ist eine wesentlich geringere Rechenleistung erforderlich, sodass der Einplatinencomputer ausreicht.

Wenn das Dentalgerät eingeschaltet und betriebsbereit ist, wird auch das Codewortmodul aktiviert.

Das auf einem leistungsfähigeren Mikrocomputer basierende Spracherkennungsmodul im übrigen ist in diesem Betriebszustand hingegen im Schlafmodus. Wenn das Codewortmodul das Codewort erkennt, gibt es ein Triggersignal ab, mit dem der leistungsfähigere Mikrocomputer in den aktiven Modus versetzt wird. Dies geschieht innerhalb von Sekundenbruchteilen, beispielsweise innerhalb von 0,1 Sekunden.

In dem nunmehr vorliegenden Erkennungsmodus hört das Spracherkennungsmodul zu und versucht, Steuerworte zu erkennen, um die erwünschte Funktion auslösen zu können.

Erfndungsgemäß besonders günstig ist es, dass das erfindungsgemäße Codewortmodul zwar wie das Spracherkennungsmodul grundsätzlich dafür geeignet ist, auf akustische Signale zu reagieren. Es hat jedoch einen deutlich reduzierten Funktionsumfang und ein ebenso gravierend reduziertes Vokabular.

Die Abtastrate ist gering, so dass der Analog/Digitalwandler des Codewortmoduls mit geringem Aufwand realisierbar ist und auch wenig Energie verbraucht. Dieser Gesichtspunkt ist insbesondere dann relevant, wenn das Dentalgerät als Handgerät mit einer Batterie oder einem Akkumulator ausgebildet ist.

Erfindungsgemäß ist es vorgesehen, dass auch die Erkennungsrate und die Erkennungsqualität geringer ist als bei dem Spracherkennungsmodul. In Zusammenhang mit der Erfindung vorgenommene Untersuchungen haben ergeben, dass Benutzer ohne weiteres akzeptieren, dass sie ein Codewort gegebenenfalls mehrmals sprechen müssen, bis die Aktivierung gelingt.

Das Codewortmodul analysiert lediglich einen Bruchteil der zur Verfügung stehenden Merkmale des Ausgangssignals seines A/D-Wandlers, aber die besonders signifikanten Merkmale.

Unter Aktivierung ist hier das Aktivieren und Einschalten des Spracherkennungsmoduls zu verstehen.

Es wird demgegenüber wesentlich kritischer gesehen, wenn bei der Spracherkennung Fehler passieren oder gar Fehlfunktionen aufgrund einer Falscherkennung ausgelöst werden.

Erfindungsgemäß ist das Spracherkennungsmodul und auch der gesamte es betreffende Bereich des Dentalgeräts abgeschaltet, so dass keine Fehlfunktion ausgelöst werden kann, solange nicht das Codewort erkannt wird.

in vorteilhafter Ausgestaltung der Erfindung wird das Spracherkennungsmodul ausgeschaltet, wenn ein Befehl, der eine zusammengehörende Funktion des Dentalgeräts auslöst, erkannt worden ist. Dieser Befehl kann auch durch eine Interaktion zwischen dem Benutzer und dem Dentalgerät ausgelöst werden. Beispiele hierfür sind aus der Figurenbeschreibung ersichtlich. Insofern kann das Einstellen eines Brennprogramms eines Dentalofens durch Rückfrage des Dentalofens hinsichtlich der Parameterwerte und Spracheingabe des Benutzers, einschließlich des Startens des Dentalofens mit dem ausgewählten Brennprogramm, einen Befehl darstellen.

Wenn ein Steuerwort erkannt wird, wird dieses vorsorglich über ein Ausgabemodul wiedergegeben. Dies geschieht bevorzugt so, dass das Spracherkennungsmodul der Steuervorrichtung das Wort zuleitet und diese das Wort dem Ausgabemodul zuleitet.

Alternativ ist es auch möglich, dass das Spracherkennungsmodul dem Ausgabemodul das Wort unmittelbar zuleitet.

In beiden Fällen gibt das Ausgabemodul das Wort aus, bevorzugt sowohl per Anzeige, also visuell, als auch über einen Lautsprecher.

Die betreffende Funktion wird von der Steuervorrichtung bevorzugt erst dann ausgelöst, wenn:
- Erstens eine vorgegebene Zeit abgelaufen ist, ohne dass der Benutzer die Wahl der Funktion abbricht, oder:
- Zweitens der Benutzer aktiv die Funktion bestätigt.

Eine solche Bestätigung erfolgt bevorzugt über einen Touchscreen.

Es versteht sich, dass die vorstehend beschriebene Zweiteilung des Spracherkennungsmoduls nicht unbedingt erforderlich ist. Die Erkennung des Codeworts kann auch von dem das eigentliche Spracherkennungsmodul aufweisenden Computer geleistet werden.

Bevorzugt ist das Mikrofon Teil des Spracherkennungsmoduls. Diese Ausgestaltung bietet die Möglichkeit, das Mikrofon vorab auf die optimale Erkennung zu kalibrieren.

Es ist jedoch auch möglich, ein separates Mikrofon zu verwenden. Dieses kann auch lediglich über eine Datenverbindung mit dem Spracherkennungsmodul verbunden sein. In diesem Fall kann das Mikrofon Teil eines Smartphones sein, und über eine App kann die digitalisierte Sprache dem Spracherkennungsmodul zugeleitet werden.

In einer weiter modifizierten Ausgestaltung umfasst die App auf dem Smartphone auch die Spracherkennung. Die Datenverbindung zwischen dem Smartphone und dem Dentalgerät erlaubt dann die Ansteuerung der Steuervorrichtung, in ähnlicher Weise wie bei der zuvor beschriebenen integrierten Lösung.

In einer weiteren bevorzugten Ausgestaltung ist das Ausgabemodul auch auf dem Smartphone vorgesehen. Dies ermöglicht die visuelle und oder akustische Rückmeldung direkt im Aufmerksamkeitsbereich des Benutzers.

In einer demgegenüber weiter modifizierten Ausgestaltung ist das Spracherkennungsmodul als App und das Ausgabemodul ebenfalls als Teil dieser App auf dem Smartphone vorgesehen. Ein Smartphone ist von der Rechenleistung her ohne weiteres in der Lage, die Spracherkennung und erst recht die Ausgabe zu realisieren.

Erfahrungsgemäß ergibt sich eine hohe Akzeptanz, wenn der Benutzer das Dentalgerät per Smartphone steuern kann, erst recht, wenn er dazu nicht einmal seine Finger benötigt.

In einer weiter modifizierten Ausgestaltung ist es vorgesehen, die für die Spracherkennung erforderliche Rechenleistung zu externalisieren.

Bei dieser Ausführungsform übermittelt das Dentalgerät das bevorzugt digitalisierte Ausgangssignal des Mikrofons einem externen Rechner. Der externe Rechner kann ein Desktop-Computer sein, ein lokaler Server oder auch ein Cloud-Server.

Dieser externe Rechner übermittelt dann gleich das Signal zur Auslösung der über Steuerworte erkannten Funktion.

In einer weiteren modifizierten Ausgestaltung ist es vorgesehen, dass der Benutzer mit dem erfindungsgemäßen Dentalgerät interagiert. Die Interaktion kann in Fragen bestehen, die der Benutzer dem Dentalgerät stellt, und die die Steuervorrichtung über ein eigenes KI-Modul beantwortet, oder aber auch in einer vom Benutzer ausgelösten und von ihm zu bestätigenden Funktion.

Das KI-Modul der Steuervorrichtung wird vom Ausgangssignal des Spracherkennungsmoduls gespeist und ist dazu in der Lage, aus den erkannten Wörtern eine Frage des Benutzers oder gegebenenfalls einen Befehl des Benutzers zu erkennen.

Basierend hierauf erzeugt es eine Antwort, die entweder durch Sprachausgabe oder durch eine Anzeige auf einem Bildschirm des Dentalgeräts ausgegeben wird.

Es ist auch möglich, eine Aktion des Benutzers, die sich auf das Dentalgerät bezieht, über das KI-Modul zu erkennen und das Erforderliche zu veranlassen.

Als Beispiel hierfür sei eine Bestellung von Verbrauchsmaterial, die das Dentalgerät benötigt, angeführt. Für diesen Fall ist das Dentalgerät mit dem Internet verbunden, und der Benutzer sagt zunächst das Codewort und dann z.B. den Befehl "Bestellungen" und spezifiziert dann näher das Verbrauchsmaterial, das er benötigt. Die Erkennung des Worts "Bestellungen" bewirkt, dass die nachfolgenden Wörter nicht als Steuerwörter für die Auslösung von Funktionen des Dentalgerät interpretiert werden, sondern als zu bestellende Verbrauchsmaterialien.

Das Anzeigemodul gibt dann die zu bestellenden Verbrauchsmaterialien aus und wartet auf eine Rückbestätigung des Benutzers.

Sobald diese erfolgt, wird die Bestellung der benötigten Verbrauchsmaterialien über das Internet getätigt.

In vorteilhafter Ausgestaltung der Erfindung ist es vorgesehen, dass das Ausgangssignal des Spracherkennungsmoduls einem KI-Modul zugeleitet wird. Das KI-Modul ist dafür bestimmt, basierend auf den erkannten Wörtern zum einen ist deren Sinn zu verstehen und zum anderen die erforderlichen Aktionen auszulösen. Hierbei kommen im wesentlichen drei Aktionsarten in Betracht:
Wenn der Benutzer in ganzen Sätzen spricht, versucht das CI-Modul, zu erkennen, ob mit dem Sinn des Satzes eine Funktion des Dentalgeräts übereinstimmt.

Diese wird dann entweder ausgelöst oder es wird dem Benutzer die Auslösung der Funktion vorgeschlagen und die Funktion dann nach Benutzer-Bestätigung ausgeführt.

Wenn die erkannten Wörter auf die Stellung einer Frage durch den Benutzer hindeuten, versucht das KI-Modul basierend auf den Möglichkeiten künstlicher Intelligenz eine Antwort auf die Frage bereitzustellen. Diese wird dann entweder auf dem Touchscreen ausgegeben, oder per Sprachsynthese über die Lautsprecher des Dentalgeräts. Eine dritte Möglichkeit besteht dann darin, die Antwort dem Smartphone des Benutzers zu übermitteln, das sie dann ausgibt

Wenn das KI-Modul aus dem erkannten Wörtern schließt, dass eine Bestellung oder eine sonstige über das Internet durchzuführende Operationen vom Benutzer erwünscht ist, wird diese Operation dem Benutzer angezeigt, entweder visuell oder akustisch. Bei Benutzer-Bestätigung wird die Operation dann ausgelöst.

In weiterer vorteilhafter Ausgestaltung ist es vorgesehen, dass das KI-Modul einen Logikcheck hinsichtlich der erkannten Steuerwörter vornimmt. Als Beispiel hierfür sei die Situation in einem Sinterofen angeführt, in der der Sinterprozess noch nicht abgeschlossen ist, aber die Steuerwörter für das Öffnen der Ofenhaube erkannt werden.

Das KI-Modul hat gelernt, dass ein vorzeitiges Öffnen dazu führt, dass die zu sinternden Dentalrestaurationsteile unbrauchbar werden und weggeworfen werden müssen.

Daher wird das Öffnen in dieser Situation blockiert und dementsprechend nicht ausgeführt. Der Benutzer wird hierüber informiert, über das Ausgabemodul, dass sein Befehl zwar verstanden wurde, aber aus dem genannten Grund nicht ausgeführt wurde.

Ein weiteres Beispiel einer vorteilhaften Ausgestaltung der Erfindung unter Verwendung des KI-Moduls ist eine Kollisionsprüfung von zukünftigen durchzuführenden Funktionen:
Wenn z.B. ein Benutzer den Befehl eingegeben hat, dass ein Dentalrestaurationsteil um 10 Uhr morgens des nächsten Tages fertig gebrannt und abgekühlt sein soll und zudem ein Administrator den regelmäßigen Reinigungsbrand auf 8 Uhr morgens eingestellt hat, verschiebt das KI-Modul einen der kollidierenden Termine so, dass keine Kollision mehr besteht. Im beschriebenen Fall wird bevorzugt der Reinigungsbrand des Administrators verschoben.

In weiterer vorteilhafter Ausgestaltung ist es vorgesehen, dass die Steuervorrichtung beim Erkennen eines Körperteils eines Benutzers über ein Ausgabemodul eine Information über eine ausgeführte und/oder eine auszuführende Funktion ausgibt. Damit wird die auszuführende oder die ausgeführte Aktion für den Benutzer eindeutig erkennbar, und die Bedienungssicherheit wird erhöht.

Weitere Vorteile, Einzelheiten und Merkmale ergeben sich aus der nachfolgenden Beschreibung mehrerer Ausführungsbeispiele eines erfindungsgemäßen Dentalgeräts anhand der Zeichnung.

Es zeigen:

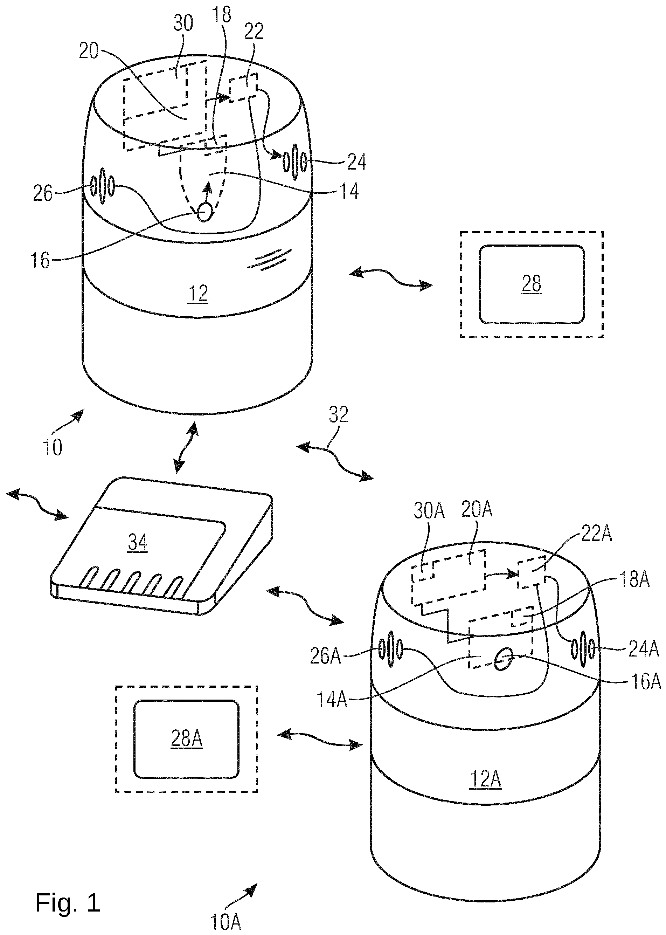

- Fig. 1: eine Ausführungsform eines schematisch dargestellten Dentalgeräts, das mit einem weiteren Dentalgerät zu kommunizieren in der Lage ist; und
- Fig. 2: ein Schaltbild für eine beispielhafte Ausgestaltung der erfindungsgemäßen Steuervorrichtung und der sonstigen für die Erfindung wichtigen Module.

Es ist ein Dentalgerät 10 vorgesehen, das in dem dargestellten Ausführungsbeispiel als Dental-Fräsmaschine ausgebildet ist.

Die Dental-Fräsmaschine kann die CAM-Vorrichtung einer CAD/CAM-Vorrichtung bilden. Sie kann auch Teil eines Fräszentrums für die Dental-Technik sein.

Das Dentalgerät 10 weist einen schematisch angedeuteten Arbeitsraum 12 auf. Außerhalb des Arbeitsraums 12, also beispielsweise oberhalb oder unterhalb dessen, ist ein Spracherkennungsmodul 14 vorgesehen. Das Spracherkennungsmodul 14 ist mittels einer Kombination von Hardware und Software implementiert.

Zu dem Spracherkennungsmodul 14 gehört ein Mikrofon 16. Das Mikrofon 16 nimmt kontinuierlich Stimmen und Geräusche aus der Umgebung auf. Sein Ausgangssignal ist mit einem A/D-Wandler verbunden, der das Ausgangssignal digitalisiert.

Das digitale Ausgangssignal wird einem Codewortmodul 18 zugeleitet, das ebenfalls in dem Spracherkennungsmodul 14 aufgenommen ist.

Das Codewortmodul 18 weist Spracherkennungsfähigkeiten auf, allerdings in einer reduzierten Weise. Es ist lediglich in der Lage, ein Codewort zu erkennen und das dann zu signalisieren.

Als Codewort wird ein maschinell leicht erkennbares Wort verwendet, das in der Umgangssprache nicht vorkommt. Bevorzugt ist das Codewort vorgegeben, in der Auslieferungssprache des Dentalgeräts 10, und lässt sich nach Wahl des Benutzers ändern, aber nicht beliebig, sondern durch eines von z.B. 5 anderen ebenfalls geeigneten Wörtern ersetzen.

Wenn das Codewort erkannt wurde, wird das übrige Spracherkennungsmodul 14 eingeschaltet oder aktiviert. Wenn das Spracherkennungsmodul 14 bereits aktiv ist, wird es aktiv gelassen.

Die darauffolgenden Worte oder Wörter werden vom Spracherkennungsmodul 14 interpretiert, und das Spracherkennungsmodul versucht dann, Steuerwörter zu erkennen.

Steuerwörter sind solche Wörter, die mit einer Funktion des Dentalgeräts 10 assoziiert sind. Die Auswahl derartiger Wörter ist beschränkt, aber nicht so, dass jeder Funktion nur ein Wort zuzurechnen ist. Bevorzugt lösen gleichbedeutende oder synonyme oder ähnliche Wörter die gleiche Funktion aus.

Beispiele hierfür lassen sich der nachstehenden Tabelle entnehmen:

**Dentalofen**

| Steuerwort | Funktion |
|---|---|
| | |
| heißer | Heizung einschalten |
| wärmer | Heizung einschalten |
| brennen | Heizung einschalten |
| abkühlen | Heizung abschalten und später Ofenhaube öffnen |
| Stop | Heizung abschalten und später Ofenhaube öffnen |
| Ende | Heizung abschalten und später Ofenhaube öffnen |

**Dental-Fräsmaschine**

| Steuerwort | Funktion |
|---|---|
| | |
| fein | Auswahl Enbearbeitungsprogramme anzeigen |
| schlicht | Auswahl Enbearbeitungsprogramme anzeigen |
| fertigfräsen | Auswahl Enbearbeitungsprogramme anzeigen |
| Um 7 Uhr starten | Vorgegebenes Fräsprogramm um 7 Uhr am nächsten Tag starten |
| 7 Uhr morgen Start | Vorgegebenes Fräsprogramm um 7 Uhr am nächsten Tag starten |
| Fräsen 7 Uhr | Vorgegebenes Fräsprogramm um 7 Uhr am nächsten Tag starten |

Ein Code, der der auszulösenden Funktion des Dentalgeräts 10 entspricht, wird von dem Spracherkennungsmodul 14 einer Steuervorrichtung 20 zugeleitet. Die Steuervorrichtung 20 steuert die Funktion des Dentalgeräts 10 programmgesteuert.

Die Steuervorrichtung 20 ist mit einem Ausgabemodul 22 verbunden. Das Ausgabemodul 22 ist in der Lage, Sprache auszugeben und weist hierzu eine Sprachsyntheseeinheit auf. Es ist mit Lautsprechern 24, 26 verbunden, die die erzeugte Sprache in Schall umwandeln.

Typischerweise wird die erkannte Funktion des Dentalgeräts 10 über das Ausgabemodul 22 und die Lautsprecher 24 und 26 noch einmal bestätigt.

Das Ausgabemodul 22 ist darüberhinaus mit einem Touchscreen 28 verbunden, der im dargestellten Ausführungsbeispiel über WLAN oder Bluetooth mit dem Dentalgerät 10 verbunden ist.

Die erzeugten Worte werden zusätzlich oder alternativ auf dem Touchscreen 28 angezeigt.

Die Kommunikation zwischen Touchscreen 28 und Ausgabemodul 22 verläuft bidirektional. Das Ausgabemodul 22 ist auch in der Lage, Benutzereingaben und beispielsweise eine Bestätigung des Benutzers über die auszuführende Funktion entgegenzunehmen und weiterzuleiten. Insofern könnte das Ausgabemodul 22 auch als Kommunikationsmodul 22 bezeichnet werden.

Typischerweise wird die betreffende Funktion von der Steuervorrichtung 20 erst dann veranlasst, wenn die Benutzereingabe bestätigt hat, dass die betreffende Funktion tatsächlich erwünscht ist.

Die Steuervorrichtung 20 weist ferner ein KI-Modul 30 auf. Das KI-Modul dient beispielsweise dazu, die auszuführenden Funktionen des Dentalgerät 10 zu überwachen und einzugreifen, wenn diese nicht sinnvoll sind. Ferner ist es in der Lage, Benutzerfragen zu beantworten, und gibt hierzu über das Ausgabemodul 22 die Antworten aus.

Darüber hinaus kann es über das Internet bestimmte Operationen ausführen, wie beispielsweise eine Bestellung von Verbrauchsmaterialien. Auch diese wird zunächst über das Ausgabemodul 22 ausgegeben und muss vom Benutzer über den Touchscreen 28 bestätigt werden.

In einer modifizierten nicht dargestellten Ausführungsform ist eine Kamera oder ein sonstiger Identifikationsscanner (z.B. ein Irisscanner oder ein Fingerabdruckscanner) an dem Dentalgerät 10 vorgesehen oder mit diesem verbunden. Dieser Scanner erfasst körperliche Merkmale des Benutzers. Das KI-Modul wertet diese aus und identifiziert so den Benutzer.

Nachfolgend eine Aufzählung von beispielhaften Kommunikationsmöglichkeiten, die von dem KI-Modul 30 geleistet werden können:
1. **Kommunikationsoption "Fragen beantworten"**
   **Benutzer:** IvoKI, **wie kann bei e.max Ceram der Helligkeitswert gesteigert werden?**
      IvoKI: Durch Auflegen von Opal Effect 4 oder Deep Dentin direkt auf den Wash bzw. Zir-Liner kann der Helligkeitswert im Dentinbereich bereits aus der Tiefe erhöht werden. Diese Bereiche anschliessend mit Dentin überschichten. *(https:*//*www.ivoclarvivadent.ch*/*de-ch*/*zahntechniker*/*ips-emax-ceram* - *Gebrauchsinformation* - *IPS e.max Ceram.pdf)*
   **Benutzer:** IvoKI, **wie kann bei e.max Ceram die zervikale Tiefenwirkung erhöht werden?**
      IvoKI: Die Cervical Transpa-Massen mit etwas höherer Fluoreszenz zur Komplettierung der Schichtung im zervikalen Drittel - z.B. CT orange-pink verwenden. *(https:*//*www.ivoclarvivadent.ch*/*de-ch*/*zahntechniker*/*ips-emax-ceram* - *Gebrauchsinformation* - *IPS e.max Ceram.pdf)*
   **Benutzer: IvoKI, wie lang ist Temperaturkalibration noch gültig?**
      IvoKI: Die nächste Temperaturkalibration sollte in zwei Wochen durchgeführt werden.
   **Benutzer: IvoKI, ist deine Software auf dem neuesten Stand?**
      IvoKI: Ja, meine Software, Version 1.23, ist auf dem neuesten Stand.
   **Benutzer: IvoKI, gibt es Schulungen zu Intraoralscannern?**
      IvoKI: Ja, das nächste Online-Training zu PrograScan Intraoralscanner findet am 9. März um 10:00 statt. Das erste Training ist kostenlos. Soll ich Dich "Max Muster" anmelden? Benutzer: Ja.
      IvoKI: Die Anmeldung wurde durchgeführt, der Termin wurde in Deinem Kalender eingetragen.
   **Benutzer: IvoKI, was kann mit dem Ivoclar 3D-Drucker alles gedruckt werden?**
      IvoKI: Das PrograPrint System unterstützt die Indikationen: Veneers, okklusale Veneers, Inlays, Onlays, Teilkronen, Kronen, Brücken, okklusionsgetragene Schienen, Bohrschablonen und Modelle.
      Benutzer: Und aus welchen Teilen besteht dieses System?
      IvoKI: Das PrograPrint System besteht aus hochqualitativen Materialien (ProArt Print) sowie aus Geräten für Druck (PrograPrint PR5), Reinigung (PrograPrint Clean) und Nachbelichtung (PrograPrint Cure). Die Materialwanne (PrograPrint Pool), Materialkartusche (PrograPrint Cartridge) und Bauplattform (PrograPrint Stage) sind Zubehörteile. Die Druckdaten werden mit der 3Shape-Software "CAMbridge" erstellt, mittels der eigens entwickelten Software "PrograPrint Manager" verarbeitet und an den Drucker übertragen. Alle Systemkomponenten sind optimal aufeinander abgestimmt und bilden einen validierten Gesamtprozess.
**2. Kommunikationsoption "Funktionen ausführen"**
   **Benutzer: IvoKI, öffne den Washbrand für e.max Ceram.**
      IvoKI: Das Brennprogramm "IPS e.max Press Schichttechnik - Washbrand" wurde geöffnet.
   **Benutzer: IvoKI, bitte reinigen.**
      IvoKI: Soll ich die Selbstreinigung durchführen?
      Benutzer: Ja.
      IvoKI: Die Selbstreinigung wurde gestartet.
   **Benutzer: IvoKI, bestelle Opal Effect Massen.**
      IvoKI: Soll ich eine Packung IPS e.max Ceram Opal Effect Massen bei Ivoclar Vivadent bestellen?
      Benutzer: Ja.
      IvoKI: Die Bestellung wurde aufgegeben.
**2. Kommunikationsoption** - **"Informieren, Annäherung erkennen"**
   *Frässystem "PrograMill":*
   **Benutzer: IvoKI, starte den Job Mustermann mit e.max CAD.**
      IvoKI: Soll ich den Job Mustermann mit der vorhandenen IPS e.max CAD Disc starten? Benutzer: Ja.
      IvoKI: Der Job wurde gestartet.
   *Die PrograMill erkennt die Annäherung des Benutzers und informiert selbstständig, ohne vorherige Benutzer-Aufforderung.*
   IvoKI: Der Job Mustermann ist abgeschlossen. Nun müssen die Objekte beim Programat kristallisiert werden.
   *Der Dentalofen "Programat" erkennt die Annäherung des Benutzers und informiert selbstständig, ohne vorherige Benutzer-Aufforderung.*
   IvoKI: In Abstimmung mit der PrograMill wurde für den Job Mustermann das Programm "Impulse/MO/Kristallisation" geöffnet.
   Benutzer: Okay
   *Der Benutzer muss nur noch den Brenngutträger mit den Objekten in den Brennraum stellen und das Programm starten.*
   *Der "Ivoclar Vivadent Assistent", die PrograMill und der Programat sind via "Ivoclar-Cloud" miteinander verbunden.*
   *Dentales SL-Drucksystem "PrograPrint":*
      **Benutzer: IvoKI**, **starte den Job Max Meier morgen früh, damit er um 7 Uhr fertig ist.**
      IvoKI: Soll ich den Job Max Meier mit der passenden Startverzögerung starten, damit er morgen um 7 Uhr fertig ist.
      Benutzer: Ja.
      IvoKI: Der Job wurde mit Verzögerung gestartet.
   *Der PrograPrint erkennt am nächsten Morgen die Annäherung des Benutzers und informiert selbstständig, ohne vorherige Benutzer-Aufforderung.*
   IvoKI: Der Job Max Meier ist abgeschlossen. Nun müssen die Objekte im PrograPrint Clean 3 Minuten gereinigt werden. Abschliessend müssen die Objekte im PrograPrint Cure mit dem Programm "ProArt Print Splint" vergütet werden.
   *Beim einfachen PrograPrint Clean positioniert der Benutzer die Bauplattform mit den Objekten in der Halterung, stellt 3 Minuten ein und startet das Gerät.*
   *Der PrograPrint Cure erkennt die Annäherung des Benutzers und informiert selbstständig, ohne vorherige Benutzer-Aufforderung.*
   IvoKI: Für den Job Max Meier wurde das Programm "ProArt Print Splint" geöffnet.
   Benutzer: Okay
   *Der Benutzer muss nur noch die Bauplattform mit den Objekten in den Vergütungsraum stellen und das Programm starten.*

In dem hier dargestellten Ausführungsbeispiel ist ein weiteres, gleichartiges Dentalgerät 10A vorgesehen, das dem Dentalgerät 10 entspricht.

Beide Dentalgeräte können über eine Bluetooth-Verbindung 32 miteinander kommunizieren. Dadurch ist es beispielsweise möglich, die auszuführenden Arbeiten zu optimieren und auch zeitlich aufeinander abzustimmen.

Beide Dentalgeräte 10 und 10A sind über einen Router 34 wie beispielsweise über eine Fritzbox mit dem Internet verbunden. Diese Verbindungen können per WLAN oder per LAN oder in beliebiger geeigneter Weise realisiert sein.

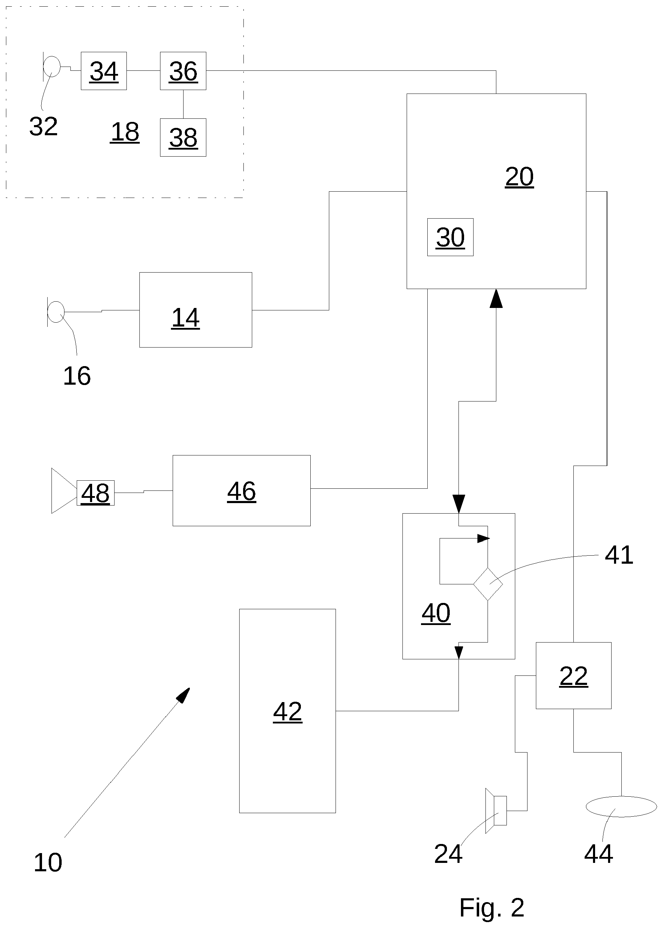

Fig. 2 zeigt ein Funktionsschaltbild für eine beispielhafte Ausgestaltung der erfindungsgemäßen Steuervorrichtung 14 und der sonstigen für die Erfindung wichtigen Module eines Stand-alone-Dentalgeräts 10.

Zu diesen Modulen gehört das Codewortmodul 18, das bei dieser Ausführungsform der Erfindung getrennt von dem Spracherkennungsmodul 14 ausgebildet ist. Dementsprechend weist das Codewortmodul 18 ein separates Mikrofon 32 auf. Anstelledessen ist es auch möglich, nur ein einziges Mikrofon 16 zu verwenden und dieses mittels eines Analogschalters entweder mit dem Codewortmodul 18 oder dem Spracherkennungsmodul 14 zu verbinden.

Das Mikrofon 32 ist in an sich bekannter Weise an einen Analog/Digital-Wandler 34 angeschlossen. Dieser wandelt das Ausgangssignal des Mikrofons 32 in ein Digitalsignal um, in an sich bekannter Weise.

Die Abtastrate des Wandlers 34 ist deutlich geringer als die des in dem Spracherkennungsmodul 14 verwendeten Analog/Digital-Wandler. Das Verhältnis der Abtastraten beider Wandler kann beispielsweise 1:2, 1:4 oder sogar 1:10 betragen. Dadurch ist der von dem Wandler 34 abgegebene Datenstrom deutlich geringer als beim Spracherkennungsmodul 14. Die Daten werden nun in an sich bekannter Weise aufbereitet, z.B über FFT mit einem Viterbi-Algorithmus.

Im dargestellten Ausführungsbeispiel wird eine Erkennung 36 nach dem hidden-Markov-model durchgeführt. Diese greift auf eine Datenbank 38 zu, die im Vergleich zu der entsprechenden Datenbank im Spracherkennungsmodul 14 nur ein geringes Vokabular umfasst.

Das Codewortmodul 18 wird eingeschaltet, sobald das Dentalgerät 10 eingeschaltet wird. Demgegenüber ist das Spracherkennungsmodul 14 zu diesem Zeitpunkt abgeschaltet.

Das Ausgangssignal des Codewortmoduls 18 wird der Steuervorrichtung 20 zugeleitet. Es besteht lediglich aus zwei Zuständen, nämlich aktiv und inaktiv.

Das Signal "aktiv" wird abgegeben, wenn das Codewort Modul 18 das Codewort erkannt hat. Sobald die Steuervorrichtung 20 das Signal "aktiv" empfängt, schaltet sie das Spracherkennungsmodul 14 ein.

Sobald das Spracherkennungsmodul 14 hochgefahren ist, überwacht es und analysiert es die über das Mikrofon 16 empfangenen Signale.

Dies bedeutet andererseits, dass ein Wort, das einem bestimmten Steuersignal des Dentalgeräts entspricht, keine Aktion auslöst, wenn es in der Umgebung des Dentalgeräts gesprochen wird, jedoch bevor das Codewort gesagt wurde.

Dieses Verhalten ist hocherwünscht, denn dadurch wird verhindert, dass versehentlich eine bestimmte Aktion des Dentalgeräts durch den Redefluss in der Umgebung ausgelöst wird.

In dem Spracherkennungsmodul 14 wird die empfangene Sprache kontinuierlich analysiert. Wenn ein Wort erkannt wird, das einem Steuerbefehl entspricht, wird ggf. über das Ausgabemodul 22 eine Rückfrage, beispielsweise eine Bitte um Bestätigung, ausgegeben. Wenn der Steuerbefehl keine weitere Benutzereingabe erfordert, wird er von der Steuervorrichtung 20 zu dem Funktionsmodul 40 übermittelt. Dieses umfasst auch ein Rechtemodul 41, mit dem geprüft wird, ob der erkannte Benutzer über die Rechte verfügt, die erwünschte Funktion, die dem Steuerbefehl entspricht, auszuführen.

Bejahendenfalls wird die Funktion zugelassen und an eine Heizung 42 als beispielhaftes Teil eines als Dentalofen ausgebildeten Dentalgeräts 10 weitergeleitet.

An das Ausgabemodul 22 ist ein Lautsprecher 24 und eine Anzeigevorrichtung 44 angeschlossen. Über diese erfolgt eine Interaktion mit dem Benutzer.

Als weitere Möglichkeit der Interaktion mit dem Benutzer ist die Steuervorrichtung 20 über ein Bilderkennungsmodul 46 mit einer Kamera 48 verbunden.

Die Kamera 48 ist z.B auf den Benutzer gerichtet, so dass eine Identitätserkennung über das Bilderkennungsmodul 46 erfolgen kann.

Der Benutzer kann aber auch Gesten ausführen, die die Kamera 48 erkennen kann. In diesem Fall ist das Bilderkennungsmodul 46 für die Gestenerkennung ausgerüstet.

Ferner kann die Kamera 48 auch mit einem Code gespeist werden, der von dem Bilderkennungsmodul 46 erkannt wird. Beispielsweise kann ein in dem Dentalofen zu brennender Block aus Dentalrestaurationsmaterial mit einem QR-Code versehen sein. Dieser wird vor die Kamera 48 gehalten, die ihn erkennt und der Steuervorrichtung 20 zuleitet. Die Steuervorrichtung 20 wählt dann automatisch das passende Brennprogramm für den Block aus.

Das Bilderkennungsmodul 46 kann zusätzlich zu dem Spracherkennungsmodul 14 verwendet werden. Es kann auch alternativ verwendet werden. Das Codewortmodul 18 kann anstelle des Spracherkennungsmoduls 14 auch das Bilderkennungsmodul 46 aktivieren, oder auch beide.

Für das Codewortmodul 18 lässt sich z.B. das Modul LD3320 der Firma Beaster verwenden, oder eine bestehende ASR-Software auf einem RaspberryPi. Für das Bilderkennungsmodul 46 lässt sich z.B. das Modul NPD101 der Firma Symbiant verwenden.

Es versteht sich, dass anstelle der hier dargestellten Dental-Fräsmaschinen oder des Dentalofens auch andere, zur Zusammenarbeit geeignete Dentalgeräte verwendet werden können. Ein Beispiel hierfür sei ein dentaler Stereolithographiedrucker und ein Nachvergütungsgerät.

Es ist auch möglich, lediglich eines der Geräte mit der erfindungsgemäßen Intelligenz auszustatten und die Geräte dann nach dem Master-Slave-Prinzip arbeiten zu lassen.

## Patentansprüche

1. Dentalgerät, nämlich Dentalofen, dentale Fräsmaschine, dentale Rapid-Prototyping-Vorrichtung, dentale Nachvergütungsvorrichtung, Dentalpoliervorrichtung, Dentalpolymerisationsgerät, dentale CAD/CAM-Vorrichtung, dentales Ausbrühgerät, Dentalmischer, Dentalgussvorrichtung, Dentalpresse, Dentaltiefziehgerät oder Dentalvibrator oder anderes Dentalgerät, mit einem Spracherkennungsmodul, welches Spracherkennungsmodul an eine Steuervorrichtung angeschlossen ist, die mindestens ein Teil der Funktionen des Dentalgeräts steuert, wobei das Spracherkennungsmodul basierend auf dem Erkennungsergebnis eine ausgewählte Funktion des Dentalgeräts über die Steuervorrichtung auslöst und mindestens ein Mikrofon aufweist, und mit einem Ausgabemodul, das Informationen über die ausgelöste Funktion ausgibt, **dadurch gekennzeichnet**, das ein Codewortmodul vorgesehen ist, das über ein Mikrofon oder über das Mikrofon kontinuierlich mithört, also die vom Mikrofon empfangenen Signale verarbeitet und analysiert, und dass das Codewortmodul beim Erkennen eines Codeworts das Spracherkennungsmodul für die zeitlich darauffolgenden Worte aktiviert oder aktiv lässt, also einschaltet oder eingeschaltet lässt, und dass das Spracherkennungsmodul diese Worte als vorgegebene, je einer Funktion zugeordnete Steuerwörter oder Steuerbefehle zu erkennen versucht.

2. Dentalgerät nach Anspruch 1, **dadurch gekennzeichnet, dass** das Spracherkennungsmodul ausgeschaltet oder deaktiviert ist, solange das Codewortmodul kein Codewort erkannt hat.

3. Dentalgerät nach Anspruch 1 oder 2, **dadurch gekennzeichnet, dass** das Codewortmodul einen Analog/Digital-Wandler aufweist, der mit geringerer Energie und/oder geringerer Abtastrate arbeitet als ein Analog/Digital-Wandler des Spracherkennungsmoduls.

4. Dentalgerät nach einem der vorhergehenden Ansprüche, **dadurch gekennzeichnet, dass** das Codewortmodul getrennt von dem Spracherkennungsmodul realisiert ist und insbesondere eingeschaltet ist, wenn das Dentalgerät eingeschaltet ist, und dass das Spracherkennungsmodul ausgeschaltet ist, solange nicht das Codewortmodul ein Codewort erkannt hat.

5. Dentalgerät nach einem der vorhergehenden Ansprüche, **dadurch gekennzeichnet, dass** das Spracherkennungsmodul in das Dentalgerät integriert ist und in elektrischer Verbindung mit der Steuervorrichtung des Dentalgeräts steht, oder dass das Spracherkennungsmodul räumlich getrennt von dem Dentalgerät ist und in Datenverbindung mit der Steuervorrichtung des Dentalgeräts steht oder bringbar ist.

6. Dentalgerät nach einem der vorhergehenden Ansprüche, **dadurch gekennzeichnet, dass** das Spracherkennungsmodul mit einem Ausgabemodul verbunden ist, das akustisch und/oder visuell das oder die erkannten Wörter wiedergibt, und/oder, dass das Spracherkennungsmodul über ein KI-Modul mit dem Ausgabemodul verbunden ist, das akustisch und/oder visuell Antworten auf das oder die erkannten Wörter ausgibt, wobei das KI-Modul insbesondere Teil der Steuervorrichtung ist oder in einer cloud oder einem sonstigen entfernten Speicher realisiert ist

7. Dentalgerät nach einem der vorhergehenden Ansprüche, **dadurch gekennzeichnet, dass** das Spracherkennungsmodul über ein KI-Modul mit dem Internet verbunden ist oder das Spracherkennungsmodul über das Internet auf das KI-Modul zugreift, und dass das KI-Modul oder das Spracherkennungsmodul oder die Steuervorrichtung basierend auf dem oder den erkannten Wörtern eine Aktion, insbesondere eine Bestellung, auslöst.

8. Dentalgerät nach einem der vorhergehenden Ansprüche, **dadurch gekennzeichnet, dass** das Spracherkennungsmodul mit einem Ausgabemodul verbunden ist, das basierend auf dem oder den erkannten Wörtern akustisch oder visuell eine Auswahl an bestehenden Funktionen anzeigt und zur Auswahl aus diesen auffordert, und/oder, dass die Steuervorrichtung über das Ausgabemodul eine Information über die von ihr ausgeführte und/oder auszuführende Funktion akustisch und/oder visuell ausgibt.

9. Dentalgerät nach einem der vorhergehenden Ansprüche, **dadurch gekennzeichnet, dass** die Steuervorrichtung über das Ausgabemodul eine Auswahl oder eine Frage zu von ihr ausgeführte und/oder auszuführende Funktionen akustisch und/oder visuell ausgibt und über das Spracherkennungsmodul auf eine Antwort eine Benutzers wartet und basierend auf dem oder den erkannten Wörtern eine Funktion auslöst.

10. Dentalgerät nach Anspruch 9, **dadurch gekennzeichnet, dass** die Steuervorrichtung basierend auf dem oder den von dem Spracherkennungsmodul erkannten Wörtern ein in der Zukunft zu startende Funktion abspeichert und zeitrichtig startet.

11. Dentalgerät nach einem der vorhergehenden Ansprüche, **dadurch gekennzeichnet, dass** das Spracherkennungsmodul und/oder die Steuervorrichtung mit mindestens einem weiteren Dentalgerät und dessen Steuervorrichtung per Datenverbindung verbunden ist.

12. Dentalgerät mit einer Kamera und einem Bilderkennungsmodul, das an eine Steuervorrichtung angeschlossen ist, die mindestens einen Teil der Funktionen des Dentalgeräts steuert, **dadurch gekennzeichnet, dass** das Bilderkennungsmodul ein von der Kamera aufgenommenes Bild erkennt und basierend auf dem so gewonnenen Erkennungsergebnis eine ausgewählte Funktion des Dentalgeräts über die Steuervorrichtung auslöst und dass eine Rückmeldevorrichtung an die Steuervorrichtung angeschlossen ist, die Informationen über die ausgelöste Funktion über ein Ausgabemodul ausgibt.

13. Dentalgerät nach Anspruch 12, **dadurch gekennzeichnet, dass** das Bilderkennungsmodul über die Kamera kontinuierlich Bilder aufnimmt und erkennt und beim Erkennen eines bestimmten Bildes bestimmte Rechte freischaltet.

14. Dentalgerät nach Anspruch 12 oder 13, **dadurch gekennzeichnet, dass** das Bilderkennungsmodul beim Erkennen eines Körperteils eines Benutzers die für diesen Benutzer bestehenden Rechte zur Auslösung von Funktionen des Dentalgeräts aktiviert oder aktiv lässt.

15. Dentalgerät nach Anspruch 12 bis 14, **dadurch gekennzeichnet, dass** das Bilderkennungsmodul den Benutzer über das Erkennen zeitlich darauffolgender Bilder und/oder Spracherkennungsmodul über das Erkennen zeitlich darauffolgender Wörter mindestens eine Funktion des Dentalgeräts, zu der er berechtigt ist, ausführen lässt.
